(19) Europäisches Patentamt
European Patent Office
Office européen des brevets

(11) Veröffentlichungsnummer: **0 324 404 B1**

(12) **EUROPÄISCHE PATENTSCHRIFT**

(45) Veröffentlichungstag der Patentschrift: **24.03.93**

(51) Int. Cl.5: **C09B 67/22**, D06P 1/18

(21) Anmeldenummer: **89100259.4**

(22) Anmeldetag: **09.01.89**

Die Akte enthält technische Angaben, die nach dem Eingang der Anmeldung eingereicht wurden und die nicht in dieser Patentschrift enthalten sind.

# (54) Mischungen von Monoazofarbstoffen.

(30) Priorität: **13.01.88 DE 3800709**

(43) Veröffentlichungstag der Anmeldung:
**19.07.89 Patentblatt 89/29**

(45) Bekanntmachung des Hinweises auf die Patenterteilung:
**24.03.93 Patentblatt 93/12**

(84) Benannte Vertragsstaaten:
**CH DE ES FR GB IT LI**

(56) Entgegenhaltungen:
**EP-A- 0 106 104**
**DE-A- 3 536 718**

**CHEMICAL ABSTRACTS, Band 98, Nr. 16, 1983, Seite 76, Nr. 127682c, Columbus, Ohio, US; & JP-A-57 168 953 (SUMITOMO CHEMICAL CO., LTD.) 18-10-1982**

**CHEMICAL ABSTRACTS, Band 95, Nr. 6, August 1981, Seite 72, Nr. 44669r, Columbus, Ohio, US; & JP-A-80 148 288 (MITSUI TOATSU CHEMICALS, INC.) 18-11-1980**

(73) Patentinhaber: **CASSELLA Aktiengesellschaft**
**Hanauer Landstrasse 526**
**W-6000 Frankturt am Main 61(DE)**

(72) Erfinder: **Bühler, Ulrich, Dr.**
**Kastanienweg 8**
**W-8755 Alzenau(DE)**

(74) Vertreter: **Urbach, Hans-Georg, Dr. et al**
**Hanauer Landstrasse 526**
**W-6000 Frankturt am Main 61 (DE)**

EP 0 324 404 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen von Monoazofarbstoffen, die dadurch gekennzeichnet sind, daß sie zwei oder mehrere verschiedene Farbstoffe der allgemeinen Formel I

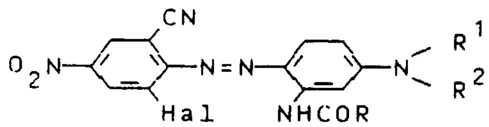

(I)

in der

$R^1$ und $R^2$ unabhängig voneinander lineares oder verzweigtes Alkyl mit 1 bis 4 Kohlenstoffatomen,

R lineares oder verzweigtes Alkyl mit 1 bis 5 Kohlenstoffatomen und

Hal Chlor oder Brom

bedeuten, enthalten oder aus diesen Farbstoffen bestehen, wobei sich die Farbstoffe zumindest in den Resten R unterscheiden.

Die Erfindung betrifft auch Verfahren zur Herstellung der erfindungsgemäßen Farbstoffmischungen sowie Verfahren zum Färben und Bedrucken von hydrophoben Fasermaterialien und deren Mischungen mit natürlichen Fasermaterialien.

Monoazofarbstoffe der allgemeinen Formel I sind teilweise bekannt und z.B. in der DAS 12 48 190 oder als Ausgangssubstanzen bei der Herstellung von 2,6-Dicyanazofarbstoffen in der DOS 22 41 392 oder der EP 36 512 beschrieben. Der Farbstoff der Formel I, in der Hal Brom und R, $R^1$ und $R^2$ Ethyl bedeuten, ist als C.I.Disperse Blue 183 bereits im Handel. Weiterhin sind aus der japanischen Patentanmeldung 57-139578 Mischungen von Farbstoffen der allgemeinen Formel I, in der R Methyl und $R^1$ und $R^2$ unabhängig voneinander Ethyl oder n-Propyl bedeutet, bekannt.

Es wurde nun überraschenderweise gefunden, daß die erfindungsgemäßen Mischungen wesentlich verbesserte färberische Eigenschaften sowohl im Vergleich zu den Einzelverbindungen einschließlich dem Handelsprodukt, als auch im Vergleich zu den bereits bekannten Mischungen aufweisen.

Die erfindungsgemäßen Farbstoffmischungen bestehen aus zwei oder mehr verschiedenen, z.B. 2, 3 oder 4 verschiedenen Farbstoffen der allgemeinen Formel I. Bevorzugt sind erfindungsgemäße Farbstoffmischungen, die aus 2 verschiedenen Farbstoffen der allgemeinen Formel I bestehen.

Bevorzugt sind auch Farbstoffmischungen, die aus Farbstoffen der allgemeinen Formel I bestehen, wobei $R^1$ und $R^2$ lineares Alkyl mit 2 bis 4 C-Atomen oder R lineares oder verzweigtes Alkyl mit 1 bis 3 C-Atomen bedeuten. Besonders bevorzugt sind solche Farbstoffmischungen, bei denen die Einzelfarbstoffe beide vorgenannten Bedingungen erfüllen, d.h. bei denen $R^1$ und $R^2$ linares Alkyl mit 2 bis 4 C-Atomen und R lineares oder verzweigtes Alkyl mit 1 bis 3 C-Atomen bedeuten. Bevorzugt sind weiter Farbstoffmischungen, die aus Farbstoffen der allgemeinen Formel I bestehen, wobei $R^1$ und $R^2$ identisch sind und besonders bevorzugt $R^1$ und $R^2$ Ethyl bedeuten. Ganz besonders bevorzugt sind Farbstoffmischungen, die aus zwei verschiedenen Farbstoffen der allgemeinen Formel I bestehen, bei denen $R^1$ und $R^2$ Ethyl bedeuten. Ganz besonders bevorzugt sind dabei für R die Kombinationen Ethyl/n-Propyl, Methyl/Ethyl und n-Propyl/i-Propyl und insbesondere Methyl/n-Propyl.

Weiter sind Farbstoffmischungen bevorzugt, die mindestens einen Farbstoff der allgemeinen Formel I enthalten, wobei Hal Brom bedeutet. Ganz besonders bevorzugt sind Farbstoffmischungen, die ausschließlich aus Einzelfarbstoffen der allgemeinen Formel I bestehen, in denen Hal Brom bedeutet.

Besonders bevorzugt sind auch Farbstoffmischungen, die aus Mischkristallen bestehen, die aus zwei oder mehreren der Farbstoffe der allgemeinen Formel I gebildet sind.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und der maximale Gewichtsanteil 90 %. Bei Farbstoffmischungen, die nur aus zwei Farbstoffen der allgemeinen Formel I bestehen, ist ein Mengenverhältnis von 70 : 30 bis 30 : 70 bevorzugt, d.h. der Gewichtsanteil eines Farbstoffs beträgt 30 bis 70 %.

Die erfindungsgemäßen Farbstoffmischungen können nach verschiedenen Verfahren hergestellt werden, einmal durch Mischung von mindestens zwei Einzelfarbstoffen der allgemeinen Formel I, vorzugsweise unter Zusatz von Dispergiermitteln. Dieser Mischprozeß erfolgt zweckmäßigerweise in geeigneten Mühlen, beispielsweise Kugel- und Sandmühlen. Getrennt formierte Einzelfarbstoffe können aber auch durch Einrühren in Färbeflotten gemischt werden.

Als Dispergiermittel kommen solche anionischer oder nicht anionischer Natur in Betracht. Als anionische Dispergiermittel seien genannt Kondensationsprodukte von Naphthalin, Formaldehyd und Schwefelsäure sowie Ligninsulfonate. Nichtionische Dispergiermittel sind z.B. in der DOS 27 57 330 beschrieben.

Die Einzelfarbstoffe der allgemeinen Formel I sind soweit bekannt, z.B. in der DBP 17 94 402 und in der DOS 30 09 695 beschrieben.

Soweit die Einzelfarbstoffe der allgemeinen Formel I noch nicht bekannt sind, können sie in an sich bekannter Weise dadurch hergestellt werden, daß eine Diazoniumverbindung eines aromatischen Amins der allgemeinen Formel II

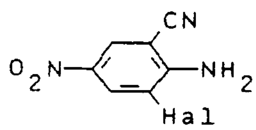

(II)

worin Hal Chlor oder Brom bedeutet, mit einer Kupplungskomponente der allgemeinen Formel III

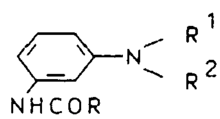

(III)

in der R, $R^1$, $R^2$ und R die oben angegebenen Bedeutungen besitzen, gekuppelt wird.

Aus den Aminen der allgemeinen Formel II werden Diazoniumverbindungen in an sich bekannter Weise durch Einwirkung von salpetriger Säure oder anderen Nitrosoniumionen bildenden Systemen in einem sauren wäßrigen Medium, einer Niederalkancarbonsäure, wie z.B. Ameisensäure, Essigsäure oder Propionsäure oder deren Mischungen oder einem organischen Lösungsmittel bei Temperaturen von 0 bis 40 °C erhalten.

Die Kupplung erfolgt ebenfalls in an sich bekannter Weise durch Vereinigung der erhaltenen Lösung der Diazoniumverbindung mit einer Lösung der Kupplungskomponente bei Temperaturen von 0 bis 40 °C, vorzugsweise 0 bis 25 °C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der allgemeinen Formel I kann wie üblich isoliert und getrocknet werden.

Die benötigten Ausgangsverbindungen der allgemeinen Formeln II und III lassen sich aus bekannten Handelsprodukten nach bekannten Verfahren herstellen.

Ein zweites, bevorzugtes Verfahren zur Herstellung der erfindungsgemäßen Farbstoffmischungen ist dadurch gekennzeichnet, daß ein Amin der Formel IIa und/oder ein Amin der Formel IIb

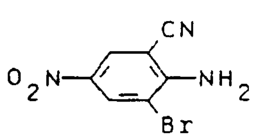

(IIa)

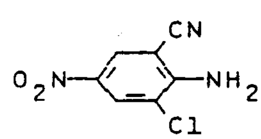

(IIb)

diazotiert und auf eine Mischung aus mindestens zwei verschiedenen Kupplungskomponenten der allgemeinen Formel III

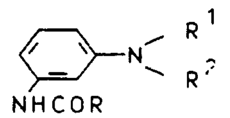

(III)

worin R, $R^1$ und $R^2$ die oben angegebenen Bedeutungen haben, gekuppelt wird.

Die Zusammensetzung der Mischung der Kupplungskomponenten der allgemeinen Formel III und gegebenenfalls der Amine der Formeln IIa und IIb werden dabei so gewählt, daß erfindungsgemäße Farbstoffmischungen entstehen. Diazotierung und Kupplung werden in an sich bekannter Weise und wie bereits oben beschrieben ausgeführt.

Bevorzugte Farbstoffmischungen bestehen aus Mischkristallen. Erfindungsgemäße aus Mischkristallen bestehende Farbstoffmischungen können dadurch hergestellt werden, daß man eine Mischung aus mindestens zwei getrennt hergestellten, verschiedenen Farbstoffen der allgemeinen Formel I auflöst und zur Kristallisation oder Ausfällung bringt. Zur Auflösung der Farbstoffmischung sind z.B. organische Lösungsmittel, wie Dimethylformamid, Dimethylsulfoxid, Chlorbenzol, o-Dichlorbenzol, Toluol etc. geeignet. Auch Gemische Verschiedener Lösungsmittel können verwendet werden. Die Auflösung erfolgt zweckmäßigerweise bei der Siedetemperatur des Lösungsmittels oder Lösungsmittelgemischs. Beim Abkühlen kristallisieren dann Mischkristalle aus. Statt durch Abkühlung können die Mischkristalle auch durch Ausfällung, d.h. durch Zusatz eines Lösungsmittels, in dem Farbstoff weniger löslich ist, zur Abscheidung gebracht werden.

Die Mischkristallbildung kann bevorzugt auch so durchgeführt werden, daß man eine Mischung aus mindestens zwei getrennt hergestellten, verschiedenen Farbstoffen der allgemeinen Formel I in einem schlecht lösenden Lösungsmittel oder Dispersionsmittel erwärmt, wobei nur eine teilweise bis herab zu einer verschwindend geringen Auflösung stattfindet und die Mischung dadurch in Mischkristalle umwandelt. Als besonders geeignetes Lösungs-oder besser gesagt Dispersionsmittel für eine derartige Umwandlung der Farbstoffmischungen in Mischkristalle hat sich Wasser bei Temperaturen von 80 bis 190 ° C, insbesondere 90 bis 150 ° C, vorzugsweise 100 bis 140 ° C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsvermittler ist dabei zweckmäßig. Ein solcher Lösungsvermittler ist z.B. ein in Wasser ganz lösliches Lösungsmittel, wie z.B. Ethanol, oder ein in Wasser nur teilweise lösliches organisches Lösungsmittel, wie z.B. n-Butanol.

Bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren, Alkyl- oder Alkylaryl-sulfonate, sowie Alkylaryl-polyglykolethersulfate. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$-$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet.

Besonders bevorzugt werden Mischkristalle durch die oben erwähnte Mischkupplung erhalten.

Das Vorliegen von Mischkristallen kann durch Röntgenbeugungsdiagramme nachgewiesen werden.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien geeignet. Überraschenderweise sind sie, insbesondere, wenn sie in Form von Mischkristallen vorliegen, den Einzelfarbstoffen und den Mischungen der japanischen Patentanmeldung 57-139578 im Hinblick auf färberisches Verhalten oder coloristische Echtheiten, wie z.B. Egalisiervermögen, Thermomigration, Thermofixierechtheit, Wasser-, Wasch- und Reibechtheit, insbesondere im Aufbau- und Ausziehvermögen und der Temperaturempfindlichkeit, überlegen. Außerdem werden bei den erfindungsgemäßen

Farbstoffmischungen auch bei einer Herabsetzung der Färbetemperaturen noch hervorragend farbstarke Färbungen bei ausgezeichneter Baderschöpfung erhalten.

Als hydrophobe synthetische Materialien kommen z.B. in Betracht: Cellulose-2$^1$/2-Acetat, Cellulosetriacetat, Polyamide und besonders hochmolekulare Polyester, wie z.B. Polyethylenglykolterephthalat.

Vorzugsweise werden die erfindungsgemäßen Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Cellulosetriacetat eingesetzt. Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes erfolgt in an sich bekannter Weise, vorzugsweise aus wäßriger Suspension, gegebenenfalls in Gegenwart von Carriern, zwischen 80 bis ca. 110 ° C nach dem Ausziehverfahren oder nach dem HT-Verfahren im Färbeautoklav bei 110 bis 140 ° C, sowie nach dem sogenannten Thermofixierverfahren, wobei die Ware mit der Färbeflotte geklotzt und anschließend bei etwa 180 bis 230 ° C fixiert wird. Das Bedrucken der genannten Materialien kann so durchgeführt werden, daß die mit erfindungsgemäßen Farbstoffmischungen enthaltenden Druckpasten bedruckte Ware zur Fixierung des Farbstoffs, gegebenenfalls in Gegenwart eines Carriers, bei Temperaturen zwischen 110 und 230 ° C mit HT-Dampf, Druckdampf oder Trockenhitze behandelt wird. Man erhält auf diese Weise sehr farbstarke blaue Färbungen und Drucke mit sehr guten Echtheitseigenschaften, insbesondere einer sehr guten Lichtechtheit und einer sehr guten Trockenhitzeplissier- und Fixierechtheit.

Die erfindungsgemäßen Farbstoffmischungen können auch zum Färben der vorstehend aufgeführten hydrophoben Materialien aus organischen Lösungsmitteln nach den hierbei bekannten Methoden und zum Färben in der Masse verwendet werden.

An den bei obigen Applikationen eingesetzten Färbeflotten und Druckpasten sollen die erfindungsgemäßen Farbstoffmischungen in möglichst feiner Verteilung vorliegen.

Die Feinverteilung der Farbstoffe erfolgt in an sich bekannter Weise dadurch, daß man die Farbstoffmischungen zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegen im allgemeinen zwischen 0,5 und 5 µm, vorzugsweise bei etwa 1 µm.

Die bei dem Mahlvorgang mitverwendeten Dispergiermittel können die bereits im Zusammenhang mit der Herstellung der Mischkristalle durch Erhitzen in Wasser genannten nichtionischen oder anionischen Dispergiermittel sein.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 30 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Farbstoffzubereitungen können auch noch weitere Hilfsmittel enthalten, z.B. solche, die als Oxydationsmittel wirken, wie z.B. Natrium-m-nitrobenzolsulfonat oder fungizide Mittel, wie z.B. Natrium-o-phenylphenolat und Natrium-penta-chlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1 : 5 bis 1 : 50 ergibt.

Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln, wie z.B. Alkali-Alginaten oder dergl., und gegebenenfalls weiteren Zusätzen, wie z.B. Fixierbeschleunigern, Netzmitteln und Oxydationsmitteln, zu Druckpasten verknetet. Die Erfindung wird durch die folgenden Beispiele näher erläutert:

Beispiel 1:

24,2 g 2-Brom-6-cyan-4-nitroanilin werden bei 15 bis 20 °C in einer Mischung aus 100 g konz. Schwefelsäure und 100 g Eisessig mit 32,5 g 41,4%iger Nitrosylschwefelsäure diazotiert und bei 10 bis 15 °C auf eine Mischung aus 10,8 g N-Acetyl-N',N'-diethylphenylendiamin-1,3 und 12,3 g N-n-Butyryl-N,N'-diethylphenylendiamin-1,3, die in 300 ml Wasser durch Zugabe von 7,5 g konz. Schwefelsäure gelöst wurden, unter direkter Eiskühlung gekuppelt. Nach beendeter Kupplung wird der Ansatz filtriert, mit Wasser neutral gewaschen und unter vermindertem Druck getrocknet. Es werden 37,5 g einer Farbstoffmischung der Formel

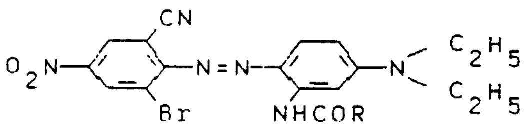

R = 50% $CH_3$
50% n-$C_3H_7$

erhalten, die sich in o-Dichlorbenzol mit blauer Farbe löst.

30 g der so erhaltenen Farbstoffmischung werden in 250 ml Wasser mit 87,2 g Natriumligninsulfonat und 12,6 g eines nichtionogenen Dispergiermittels auf Basis Arylpolyglykolether versetzt und mit 50%iger Essigsäure auf einen pH-Wert von 8 gestellt.

Anschließend wird 2 Stunden bei Raumtemperatur in der Perlmühle bis zur Feinverteilung (80 % ≦1 µm) gemahlen, gesiebt und im Sprühtrockner getrocknet.

2 g des so erhaltenen Pulvers werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1 Stunde bei 125 °C. Nach anschließendem Spülen, reduktiver Nachbehandlung mit einer 0,2%igen Natriumdithionitlösung während 15 Minuten bei 70 bis 80 °C, Spülen und Trocknen, erhält man eine farbstarke blaue Färbung mit hervorragenden coloristischen Eigenschaften.

Bringt man zur Herstellung eines Nachzuges in das Färbebad nochmals 100 g eines texturierten Polyestergerwebes auf Basis Polyethylenglykolterephthalat ein und färbt 1 Stunde bei 135 °C und behandelt den Nachzug, wie vorstehend bei der eigentlichen Färbung angegeben nach, so erhält man eine nahezu farblose Färbung.

Beispiel 2:

Bei einer Wiederholung der im Beispiel 1 angegebenen Synthesevorschrift ersetzt man die 10,8 g N-Acetyl-N,N'-diethylphenylendiamin-1,3 durch 12,3 g N-n-Butyryl-N,N'-diethylphenylendiamin-1,3 und erhält 39 g des Farbstoffs der Formel

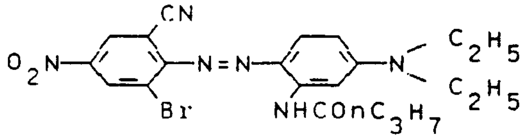

der sich in o-Dichlorbenzol mit blauer Farbe löst.

Je 15 g des so hergestellten Farbstoffs und des Farbstoffs der Formel

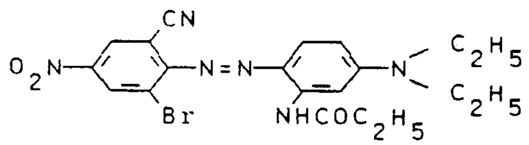

(≙ C.I. Disperse Blue 183) in 100%iger Form werden in 250 ml Wasser mit 43,6 g Natriumligninsulfonat und 12,6 g eines nichtionogenen Dispergiermittels auf Basis Arylpolyglykolether versetzt und mit 50%iger Essigsäure auf einen pH-Wert von 5,9 gestellt und mit dem Zackenrührer homogenisiert. Dann wird die erhaltene Dispersion im Autoklaven innerhalb von 3 Stunden auf 120 ° C erwärmt und 2 Stunden bei dieser Temperatur gerührt. Nach dem Abkühlen werden 43,6 g eines Kondensationsproduktes aus Kresol, Formaldehyd und Naphthol-2-sulfonsäure-natriumsalz zugesetzt und die Dispersion mit 50%iger Essigsäure auf pH 8,0 gestellt.

Anschließend wird wie im Beispiel 1 beschrieben gemahlen und sprühgetrocknet.

Wird mit dem so erhaltenen Pulvers analog Beispiel 1 Polyester bei 130 ° C gefärbt, erhält man ebenfalls eine farbstarke blaue Färbung mit hervorragenden coloristischen Echtheiten und einen nahezu farblosen Nachzug.

In der nachstehenden Tabelle sind weitere erfindungsgemäße Farbstoffmischungen mit den Bedeutungen Hal, R, $R^1$ und $R^2$ und dem Gewichtsverhältnis der Einzelfarbstoffe der allgemeinen Formel I angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

| Beispiel | $R^1$ | $R^2$ | R | Hal | Gewichtsverhältnis | Nuance auf PES |
|---|---|---|---|---|---|---|
| 3 | $C_2H_5$ | $C_2H_5$ | $CH_3$ | Br | 2 | blau |
| | $C_2H_5$ | $C_2H_5$ | $C_2H_5$ | Br | 1 | |
| 4 | $C_2H_5$ | $C_2H_5$ | $CH_3$ | Br | 1 | blau |
| | $C_2H_5$ | $C_2H_5$ | $C_2H_5$ | Br | 2 | |
| 5 | $n-C_3H_7$ | $n-C_3H_7$ | $CH_3$ | Br | 1 | blau |
| | $n-C_3H_7$ | $n-C_3H_7$ | $C_2H_5$ | Br | 1 | |
| 6 | $n-C_3H_7$ | $n-C_3H_7$ | $CH_3$ | Br | 3 | blau |
| | $C_2H_5$ | $C_2H_5$ | $C_2H_5$ | Br | 4 | |
| 7 | $n-C_4H_9$ | $n-C_4H_9$ | $CH_3$ | Br | 2 | blau |
| | $C_2H_5$ | $C_2H_5$ | $C_2H_5$ | Br | 3 | |
| 8 | $C_2H_5$ | $i-C_3H_7$ | $CH_3$ | Br | 1 | blau |
| | $C_2H_5$ | $C_2H_5$ | $C_2H_5$ | Br | 3 | |
| 9 | $C_2H_5$ | $C_2H_5$ | $CH_3$ | Br | 1 | blau |
| | $CH_3$ | $n-C_4H_9$ | $C_2H_5$ | Br | 1 | |
| 10 | $n-C_3H_7$ | $n-C_3H_7$ | $CH_3$ | Br | 2 | blau |
| | $C_2H_5$ | $C_2H_5$ | $C_2H_5$ | Br | 1 | |
| 11 | $n-C_4H_9$ | $C_2H_5$ | $CH_3$ | Br | 4 | blau |
| | $n-C_3H_7$ | $n-C_3H_7$ | $C_2H_5$ | Br | 5 | |
| 12 | $C_2H_5$ | $C_2H_5$ | $CH_3$ | Br | 1 | blau |
| | $C_2H_5$ | $i-C_4H_9$ | $C_2H_5$ | Br | 1 | |
| 13 | $C_2H_5$ | $C_2H_5$ | $CH_3$ | Br | 1 | blau |
| | $C_2H_5$ | $C_2H_5$ | $n-C_3H_7$ | Br | 2 | |
| 14 | $C_2H_5$ | $C_2H_5$ | $CH_3$ | Br | 1 | blau |
| | $C_2H_5$ | $C_2H_5$ | $n-C_3H_7$ | Br | 3 | |

| Beispiel | $R^1$ | $R^2$ | R | Hal | Gewichtsverhältnis | Nuance auf PES |
|---|---|---|---|---|---|---|
| 15 | $n-C_3H_7$ | $n-C_3H_7$ | $CH_3$ | Br | 1 | blau |
| | $C_2H_5$ | $C_2H_5$ | $n-C_3H_7$ | Br | 1 | |
| 16 | $n-C_3H_7$ | $n-C_3H_7$ | $CH_3$ | Br | 5 | blau |
| | $n-C_3H_7$ | $n-C_3H_7$ | $n-C_3H_7$ | Br | 4 | |
| 17 | $n-C_4H_9$ | $n-C_4H_9$ | $CH_3$ | Br | 3 | blau |
| | $C_2H_5$ | $C_2H_5$ | $n-C_3H_7$ | Br | 4 | |
| 18 | $CH_3$ | $i-C_4H_9$ | $CH_3$ | Br | 1 | blau |
| | $C_2H_5$ | $C_2H_5$ | $n-C_3H_7$ | Br | 3 | |
| 19 | $C_2H_5$ | $C_2H_5$ | $CH_3$ | Br | 1 | blau |
| | $C_2H_5$ | $i-C_3H_7$ | $n-C_3H_7$ | Br | 1 | |
| 20 | $C_2H_5$ | $C_2H_5$ | $CH_3$ | Br | 5 | blau |
| | $C_2H_5$ | $C_2H_5$ | $i-C_3H_7$ | Br | 7 | |
| 21 | $n-C_3H_7$ | $n-C_3H_7$ | $CH_3$ | Br | 1 | blau |
| | $C_2H_5$ | $C_2H_5$ | $i-C_3H_7$ | Br | 1 | |
| 22 | $C_2H_5$ | $C_2H_5$ | $CH_3$ | Br | 3 | blau |
| | $C_2H_5$ | $C_2H_5$ | $n-C_4H_9$ | Br | 7 | |
| 23 | $n-C_4H_9$ | $n-C_4H_9$ | $C_2H_5$ | Br | 2 | blau |
| | $C_2H_5$ | $C_2H_5$ | $i-C_4H_9$ | Br | 1 | |
| 24 | $C_2H_5$ | $C_2H_5$ | $n-C_3H_7$ | Br | 1 | blau |
| | $C_2H_5$ | $C_2H_5$ | sek.$C_4H_9$ | Br | 1 | |
| 25 | $n-C_3H_5$ | $n-C_3H_7$ | $CH_3$ | Br | 1 | blau |
| | $C_2H_5$ | $C_2H_5$ | $n-C_5H_{11}$ | Br | 2 | |
| 26 | $C_2H_5$ | $i-C_3H_7$ | $C_2H_5$ | Br | 1 | blau |
| | $C_2H_5$ | $i-C_3H_7$ | $CH(CH_3)-C_3H_7$ | Br | 1 | |

| Beispiel | $R^1$ | $R^2$ | R | Hal | Gewichtsverhältnis | Nuance auf PES |
|---|---|---|---|---|---|---|
| 27 | $C_2H_5$ | $C_2H_5$ | $C_2H_5$ | Br | 1 | blau |
| | $CH_3$ | $CH_3$ | $CH(C_2H_5)_2$ | Br | 1 | |
| 28 | $C_2H_5$ | $C_2H_5$ | $CH_3$ | Br | 1 | blau |
| | $C_2H_5$ | $C_2H_5$ | $C_2H_5$ | Br | 1 | |
| | $C_2H_5$ | $C_2H_5$ | $n-C_3H_7$ | Br | 1 | |
| 29 | $C_2H_5$ | $C_2H_5$ | $CH_3$ | Br | 3 | blau |
| | $C_2H_5$ | $C_2H_5$ | $C_2H_5$ | Br | 1 | |
| | $C_2H_5$ | $C_2H_5$ | $n-C_3H_7$ | Br | 1 | |
| 30 | $n-C_3H_7$ | $n-C_3H_7$ | $CH_3$ | Br | 1 | blau |
| | $C_2H_5$ | $C_2H_5$ | $C_2H_5$ | Br | 1 | |
| | $C_2H_5$ | $C_2H_5$ | $n-C_3H_7$ | Br | 1 | |
| 31 | $C_2H_5$ | $C_2H_5$ | $C_2H_5$ | Br | 1 | blau |
| | $C_2H_5$ | $C_2H_5$ | $n-C_3H_7$ | Br | 2 | |
| | $C_2H_5$ | $C_2H_5$ | $i-C_3H_7$ | Br | 2 | |
| 32 | $C_2H_5$ | $C_2H_5$ | $CH_3$ | Br | 1 | blau |
| | $C_2H_5$ | $C_2H_5$ | $C_2H_5$ | Br | 1 | |
| | $C_2H_5$ | $C_2H_5$ | $n-C_3H_7$ | Br | 1 | |
| | $C_2H_5$ | $C_2H_5$ | $i-C_3H_7$ | Br | 1 | |
| 33 | $C_2H_5$ | $C_2H_5$ | $C_2H_5$ | Br | 1 | blau |
| | $C_2H_5$ | $C_2H_5$ | $n-C_3H_7$ | Br | 1 | |
| 34 | $n-C_3H_7$ | $n-C_3H_7$ | $C_2H_5$ | Br | 1 | blau |
| | $C_2H_5$ | $C_2H_5$ | $n-C_3H_7$ | Br | 2 | |
| 35 | $C_2H_5$ | $C_2H_5$ | $C_2H_5$ | Br | 1 | blau |
| | $n-C_3H_7$ | $n-C_3H_7$ | $i-C_3H_7$ | Br | 1 | |

| Beispiel | $R^1$ | $R^2$ | R | Hal | Gewichtsverhältnis | Nuance auf PES |
|---|---|---|---|---|---|---|
| 36 | $C_2H_5$ | $C_2H_5$ | $C_2H_5$ | Br | 2 | blau |
| | $i-C_3H_7$ | $C_2H_5$ | $i-C_3H_7$ | Br | 1 | |
| 37 | $C_2H_5$ | $C_2H_5$ | $n-C_3H_7$ | Br | 1 | blau |
| | $C_2H_5$ | $C_2H_5$ | $i-C_3H_7$ | Br | 1 | |
| 38 | $C_2H_5$ | $C_2H_5$ | $n-C_3H_7$ | Br | 2 | blau |
| | $C_2H_5$ | $C_2H_5$ | $i-C_3H_7$ | Br | 1 | |
| 39 | $n-C_3H_7$ | $n-C_3H_7$ | $n-C_3H_7$ | Br | 1 | blau |
| | $C_2H_5$ | $C_2H_5$ | $i-C_3H_7$ | Br | 1 | |
| 40 | $CH_3$ | $n-C_3H_7$ | $CH_3$ | Br | 1 | blau |
| | $CH_3$ | $n-C_3H_7$ | $n-C_3H_7$ | Br | 1 | |
| 41 | $n-C_3H_7$ | $n-C_3H_7$ | $CH_3$ | Br | 1 | blau |
| | $CH_3$ | $CH_3$ | $n-C_3H_7$ | Br | 2 | |
| 42 | $CH_3$ | $n-C_3H_7$ | $CH_3$ | Br | 5 | blau |
| | $C_2H_5$ | $C_2H_5$ | $n-C_3H_7$ | Br | 4 | |
| 43 | $CH_3$ | $i-C_3H_7$ | $CH_3$ | Br | 3 | blau |
| | $C_2H_5$ | $C_2H_5$ | $n-C_3H_7$ | Br | 7 | |
| 44 | $n-C_3H_7$ | $C_2H_5$ | $CH_3$ | Br | 1 | blau |
| | $C_2H_5$ | $C_2H_5$ | $n-C_3H_7$ | Br | 1 | |
| 45 | $C_2H_5$ | $C_2H_5$ | $CH_3$ | Br | 2 | blau |
| | $C_2H_5$ | $n-C_3H_7$ | $n-C_3H_7$ | Br | 3 | |
| 46 | $C_2H_5$ | $n-C_3H_7$ | $CH_3$ | Br | 5 | blau |
| | $C_2H_5$ | $C_2H_5$ | $i-C_3H_7$ | Br | 4 | |
| 47 | $C_2H_5$ | $C_2H_5$ | $CH_3$ | Br | 1 | blau |
| | $n-C_3H_7$ | $n-C_3H_7$ | $i-C_3H_7$ | Br | 1 | |

| Beispiel | $R^1$ | $R^2$ | R | Hal | Gewichtsverhältnis | Nuance auf PES |
|---|---|---|---|---|---|---|
| 48 | $C_2H_5$ | $C_2H_5$ | $CH_3$ | Br | 3 | blau |
| | $CH_3$ | $C_2H_5$ | $i-C_3H_7$ | Br | 7 | |
| 49 | $CH_3$ | $n-C_4H_9$ | $CH_3$ | Br | 4 | blau |
| | $n-C_3H_7$ | $n-C_3H_7$ | $i-C_3H_7$ | Br | 5 | |
| 50 | $CH_3$ | $n-C_3H_7$ | $C_2H_5$ | Br | 1 | blau |
| | $C_2H_5$ | $C_2H_5$ | $n-C_3H_7$ | Br | 1 | |
| 51 | $C_2H_5$ | $C_2H_5$ | $C_2H_5$ | Br | 7 | blau |
| | $C_2H_5$ | $C_2H_5$ | $n-C_3H_7$ | Br | 3 | |
| 52 | $C_2H_5$ | $C_2H_5$ | $C_2H_5$ | Br | 7 | blau |
| | $n-C_3H_7$ | $n-C_3H_7$ | $n-C_3H_7$ | Br | 4 | |
| 53 | $C_2H_5$ | $n-C_3H_7$ | $C_2H_5$ | Br | 3 | blau |
| | $C_2H_5$ | $n-C_3H_7$ | $n-C_3H_7$ | Br | 7 | |
| 54 | $C_2H_5$ | $C_2H_5$ | $C_2H_5$ | Br | 1 | blau |
| | $CH_3$ | $n-C_4H_9$ | $n-C_3H_7$ | Br | 1 | |
| 55 | $n-C_3H_7$ | $n-C_3H_7$ | $C_2H_5$ | Br | 4 | blau |
| | $CH_3$ | $C_2H_5$ | $n-C_3H_7$ | Br | 3 | |
| 56 | $C_2H_5$ | $C_2H_5$ | $C_2H_5$ | Br | 3 | blau |
| | $C_2H_5$ | $C_2H_5$ | $i-C_3H_7$ | Br | 2 | |
| 57 | $C_2H_5$ | $n-C_3H_7$ | $C_2H_5$ | Br | 2 | blau |
| | $C_2H_5$ | $C_2H_5$ | $i-C_3H_7$ | Br | 3 | |
| 58 | $C_2H_5$ | $CH_3$ | $n-C_3H_7$ | Br | 7 | blau |
| | $C_2H_5$ | $C_2H_5$ | $i-C_3H_7$ | Br | 3 | |
| 59 | $C_2H_5$ | $C_2H_5$ | $CH_3$ | Cl | 1 | blau |
| | $C_2H_5$ | $C_2H_5$ | $C_2H_5$ | Cl | 1 | |

| Beispiel | $R^1$ | $R^2$ | R | Hal | Gewichtsverhältnis | Nuance auf PES |
|---|---|---|---|---|---|---|
| 60 | $C_2H_5$ | $C_2H_5$ | $CH_3$ | Cl | 4 | blau |
| | $C_2H_5$ | $C_2H_5$ | $n-C_3H_7$ | Cl | 3 | |
| 61 | $C_2H_5$ | $C_2H_5$ | $CH_3$ | Cl | 3 | blau |
| | $C_2H_5$ | $C_2H_5$ | $i-C_3H_7$ | Cl | 7 | |
| 62 | $C_2H_5$ | $C_2H_5$ | $C_2H_5$ | Cl | 2 | blau |
| | $C_2H_5$ | $C_2H_5$ | $n-C_3H_7$ | Cl | 1 | |
| 63 | $C_2H_5$ | $C_2H_5$ | $C_2H_5$ | Cl | 1 | blau |
| | $C_2H_5$ | $CH_3$ | $n-C_3H_7$ | Cl | 1 | |
| 64 | $C_2H_5$ | $C_2H_5$ | $C_2H_5$ | Cl | 3 | blau |
| | $C_2H_5$ | $C_2H_5$ | $i-C_3H_7$ | Cl | 4 | |
| 65 | $C_2H_5$ | $C_2H_5$ | $CH_3$ | Cl | 1 | blau |
| | $C_2H_5$ | $C_2H_5$ | $n-C_4H_9$ | Cl | 4 | |
| 66 | $n-C_3H_7$ | $n-C_3H_7$ | $CH_3$ | Cl | 1 | blau |
| | $C_2H_5$ | $C_2H_5$ | $n-C_3H_7$ | Cl | 1 | |
| 67 | $n-C_3H_7$ | $n-C_3H_7$ | $CH_3$ | Cl | 3 | blau |
| | $C_2H_5$ | $C_2H_5$ | $C_2H_5$ | Cl | 2 | |
| 68 | $CH_3$ | $n-C_3H_7$ | $CH_3$ | Cl | 1 | blau |
| | $C_2H_5$ | $C_2H_5$ | $n-C_3H_7$ | Cl | 1 | |
| 69 | $C_2H_5$ | $C_2H_5$ | $CH_3$ | Cl | 1 | blau |
| | $C_2H_5$ | $C_2H_5$ | $C_2H_5$ | Cl | 1 | |
| | $C_2H_5$ | $C_2H_5$ | $n-C_3H_7$ | Cl | 1 | |
| 70 | $n-C_3H_7$ | $n-C_3H_7$ | $CH_3$ | Cl | 2 | blau |
| | $C_2H_5$ | $C_2H_5$ | $i-C_3H_7$ | Cl | 1 | |
| | $C_2H_5$ | $C_2H_5$ | $n-C_3H_7$ | Cl | 2 | |

| Beispiel | $R^1$ | $R^2$ | R | Hal | Gewichtsverhältnis | Nuance auf PES |
|---|---|---|---|---|---|---|
| 71 | $C_2H_5$ | $n-C_3H_7$ | $CH_3$ | Cl | 2 | blau |
| | $C_2H_5$ | $n-C_3H_7$ | $n-C_3H_7$ | Cl | 3 | |
| 72 | $C_2H_5$ | $n-C_4H_9$ | $CH_3$ | Cl | 1 | blau |
| | $C_2H_5$ | $C_2H_5$ | $n-C_3H_7$ | Cl | 1 | |
| 73 | $C_2H_5$ | $n-C_3H_7$ | $C_2H_5$ | Cl | 1 | blau |
| | $C_2H_5$ | $C_2H_5$ | $n-C_3H_7$ | Cl | 1 | |
| 74 | $C_2H_5$ | $C_2H_5$ | $CH_3$ | Br | 2 | blau |
| | $C_2H_5$ | $C_2H_5$ | $n-C_3H_7$ | Cl | 3 | |
| 75 | $C_2H_5$ | $C_2H_5$ | $C_2H_5$ | Br | 1 | blau |
| | $C_2H_5$ | $C_2H_5$ | $n-C_3H_7$ | Cl | 1 | |
| 76 | $C_2H_5$ | $C_2H_5$ | $C_2H_5$ | Br | 3 | blau |
| | $n-C_3H_7$ | $n-C_3H_7$ | $CH_3$ | Cl | 1 | |
| 77 | $C_2H_5$ | $C_2H_5$ | $C_2H_5$ | Br | 4 | blau |
| | $C_2H_5$ | $C_2H_5$ | $i-C_3H_7$ | Cl | 7 | |
| 78 | $C_2H_5$ | $C_2H_5$ | $C_2H_5$ | Br | 7 | blau |
| | $C_2H_5$ | $C_2H_5$ | $CH_3$ | Cl | 3 | |
| 79 | $C_2H_5$ | $C_2H_5$ | $CH_3$ | Cl | 1 | blau |
| | $C_2H_5$ | $C_2H_5$ | $C_2H_5$ | Br | 1 | |
| | $C_2H_5$ | $C_2H_5$ | $n-C_3H_7$ | Br | 1 | |

**Patentansprüche**

**Patentansprüche fur folgende Vertragsstaaten : CH, DE, FR, GB, IT, LI**

**1.** Mischungen von Monoazofarbstoffen, dadurch gekennzeichnet, daß sie zwei oder mehrere verschiedene Farbstoffe der allgemeinen Formel I

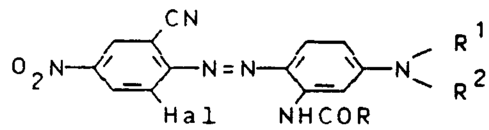

(I)

in der

$R^1$ und $R^2$ unabhängig voneinander lineares oder verzweigtes Alkyl mit 1 bis 4 Kohlenstoffatomen,

R lineares oder verzweigtes Alkyl mit 1 bis 5 Kohlenstoffatomen und

Hal Chlor oder Brom

bedeuten, enthalten oder aus diesen Farbstoffen bestehen, wobei sich die Farbstoffe zumindest in den Resten R unterscheiden.

**2.** Farbstoffmischung nach Anspruch 1, dadurch gekennzeichnet, daß sie zwei verschiedene Farbstoffe der allgemeinen Formel I enthält.

**3.** Farbstoffmischung nach Anspruch 1 und/oder 2, dadurch gekennzeichnet, daß $R^1$ und $R^2$ lineares Alkyl mit 2 bis 4 C Atomen, vorzugsweise Ethyl, und R Alkyl mit 1 bis 3 C Atomen bedeuten.

**4.** Farbstoffmischung nach einem oder mehreren der Ansprüche 1 bis 3, dadurch gekennzeichnet, daß sich die verschiedenen Farbstoffe der allgemeinen Formel I nur durch verschiedene Bedeutungen der Reste R unterscheiden und daß die Reste R im Falle von Mischungen aus zwei verschiedenen Farbstoffen bevorzugt die Bedeutungen Methyl/n-Propyl, Ethyl/n-Propyl, Methyl/Ethyl oder n-Propyl/i-Propyl haben.

**5.** Farbstoffmischung nach einem oder mehreren der Ansprüche 1 bis 4, dadurch gekennzeichnet, daß sie ausschließlich aus Einzelfarbstoffen der allgemeinen Formel I besteht, in denen Hal Brom bedeutet.

**6.** Farbstoffmischung nach einem oder mehreren der Ansprüche 1 bis 6, dadurch gekennzeichnet, daß der Gewichtsanteil eines Farbstoffs der allgemeinen Formel I 10 bis 90%, bevorzugt 30 bis 70% beträgt.

**7.** Farbstoffmischung nach einem oder mehreren der Ansprüche 1 bis 6, dadurch gekennzeichnet, daß sie in Form von Mischkristallen vorliegt.

**8.** Verfahren zur Herstellung der in einem oder mehreren der Ansprüche 1 bis 7 genannten Farbstoffmischungen, dadurch gekennzeichnet, daß

a) mindestens zwei Einzelfarbstoffe der allgemeinen Formel I miteinander gemischt werden oder

b) ein Amin der Formel IIa und/oder ein Amin der Formel IIb

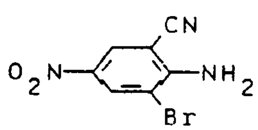

(IIa)

(IIa)

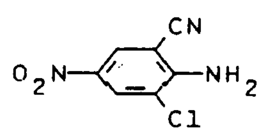

(IIb)

(IIb)

diazotiert und auf eine Mischung aus mindestens zwei verschiedenen Kupplungskomponenten der allgemeinen Formel III

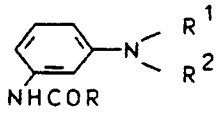

(III)

worin R, $R^1$ und $R^2$ die in Anspruch 1 angegebenen Bedeutungen haben, gekuppelt wird, und die Farbstoffmischung gegebenenfalls in an sich bekannter Weise in eine Farbstoffzubereitung überführt wird.

9. Verfahren zur Herstellung der in einem oder mehreren der Ansprüche 1 bis 7 genannten Farbstoffmischungen, dadurch gekennzeichnet, daß eine Mischung aus Einzelfarbstoffen der allgemeinen Formel I umkristallisiert oder gelöst und gefällt oder in Wasser bei Temperaturen von 80 bis 190 °C, vorzugsweise 100 bis 140 °C, in Gegenwart eines oder mehrerer Dispergiermittel oder eines organischen Lösungsmittels erhitzt wird und gegebenenfalls in eine Farbstoffzubereitung überführt wird.

10. Verfahren zum Färben und Bedrucken von hydrophoben Fasermaterialien und deren Mischungen mit natürlichen Fasermaterialien, dadurch gekennzeichnet, daß eine Farbstoffmischung nach einem oder mehreren der Ansprüche 1 bis 7 verwendet wird.

**Patentansprüche für folgenden Vertragsstaat : ES**

1. Verfahren zur Herstellung von Mischungen von Monoazofarbstoffen, die zwei oder mehrere verschiedene Farbstoffe der allgemeinen Formel I

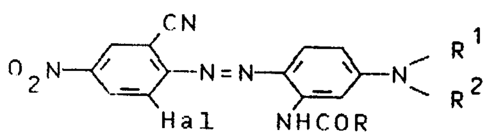

(I)

in der
$R^1$ und $R^2$ unabhängig voneinander lineares oder verzweigtes Alkyl mit 1 bis 4 Kohlenstoffatomen,
R lineares oder verzweigtes Alkyl mit 1 bis 5 Kohlenstoffatomen und
Hal Chlor oder Brom
bedeuten, enthalten oder aus diesen Farbstoffen bestehen, wobei sich die Farbstoffe zumindest in den Resten R unterscheiden, dadurch gekennzeichnet, daß
a) mindestens zwei Einzelfarbstoffe der allgemeinen Formel I miteinander gemischt werden oder
b) ein Amin der Formel IIa und/oder ein Amin der Formel IIb

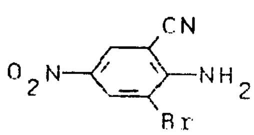

(IIa)

(IIa)

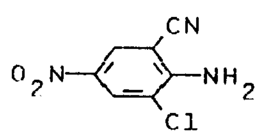

(IIb)

(IIb)

diazotiert und auf eine Mischung aus mindestens zwei verschiedenen Kupplungskomponenten der allgemeinen Formel III

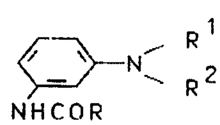

(III)

worin R, $R^1$ und $R^2$ die angegebenen Bedeutungen haben, gekuppelt wird, und die Farbstoffmischung gegebenenfalls in an sich bekannter Weise in eine Farbstoffzubereitung überführt wird.

2. Verfahren nach Anspruch 1, dadurch gekennzeichnet, daß eine Mischung aus Einzelfarbstoffen der allgemeinen Formel I umkristallisiert oder gelöst und gefällt oder in Wasser bei Temperaturen von 80 bis 190 °C, vorzugsweise 100 bis 140 °C, in Gegenwart eines oder mehrerer Dispergiermittel oder

eines organischen Lösungsmittels erhitzt wird und gegebenenfalls in eine Farbstoffzubereitung überführt wird.

3. Verfahren nach Anspruch 1 und/oder 2, dadurch gekennzeichnet, daß die Ausgangsverbindungen so gewählt werden, daß die entstandene Farbstoffmischung zwei verschiedene Farbstoffe der allgemeinen Formel I enthält.

4. Verfahren nach einem oder mehreren der Ansprüche 1 bis 3, dadurch gekennzeichnet, daß die Ausgangsverbindungen so gewählt werden, daß $R^1$ und $R^2$ lineares Alkyl mit 2 bis 4 C Atomen, vorzugsweise Ethyl, und R Alkyl mit 1 bis 3 C Atomen bedeuten.

5. Verfahren nach einem oder mehreren der Ansprüche 1 bis 4, dadurch gekennzeichnet, daß die Ausgangsverbindungen so gewählt werden, daß sich die verschiedenen Farbstoffe der allgemeinen Formel I in der entstandenen Farbstoffmischung nur durch verschiedene Bedeutungen der Reste R unterscheiden und daß die Reste R im Falle von Mischungen aus zwei verschiedenen Farbstoffen bevorzugt die Bedeutungen Methyl/n-Propyl, Ethyl/n-Propyl, Methyl/Ethyl oder n-Propyl/i-Propyl haben.

6. Verfahren nach einem oder mehreren der Ansprüche 1 bis 5, dadurch gekennzeichnet, daß die Ausgangsverbindungen so gewählt werden, daß die entstandene Farbstoffmischung ausschließlich aus Einzelfarbstoffen der allgemeinen Formel I besteht, in denen Hal Brom bedeutet.

7. Verfahren nach einem oder mehreren der Ansprüche 1 bis 6, dadurch gekennzeichnet, daß die Ausgangsverbindungen so gewählt werden, daß in der entstandenen Farbstoffmischung der Gewichtsanteil eines Farbstoffs der allgemeinen Formel I 10 bis 90%, bevorzugt 30 bis 70%, beträgt.

8. Verfahren zum Färben und Bedrucken von hydrophoben Fasermaterialien und deren Mischungen mit natürlichen Fasermaterialien, dadurch gekennzeichnet, daß eine Farbstoffmischung verwendet wird, die nach einem Verfahren eines oder mehrerer der Ansprüche 1 bis 7 hergestellt worden ist.

## Claims

**Claims for the following Contracting States : CH, DE, FR, GB, IT, LI**

1. Mixtures of monoazo dyes, characterized in that they contain two or more different dyes of the general formula I

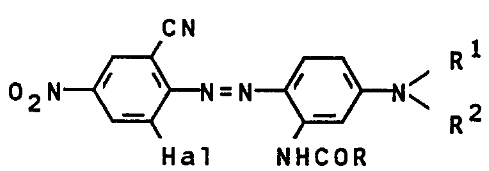

(I)

in which $R^1$ and $R^2$, independently of one another, denote linear or branched alkyl having 1 to 4 carbon atoms, R denotes linear or branched alkyl having 1 to 5 carbon atoms and Hal denotes chlorine or bromine, or that they consist of these dyes, the dyes differing at least in the radicals R.

2. Dye mixture according to Claim 1, characterized in that it contains two different dyes of the general formula I.

3. Dye mixture according to Claim 1 and/or 2, characterized in that $R^1$ and $R^2$ denote linear alkyl having 2 to 4 carbon atoms, preferably ethyl, and R denotes alkyl having 1 to 3 carbon atoms.

4. Dye mixture according to one or more of Claims 1 to 3, characterized in that the different dyes of the general formula I only differ in the various meanings of the radicals R and that the radicals R in the case of mixtures from two different dyes preferably have the meanings methyl/n-propyl, ethyl/n-propyl, methyl/ethyl or n-propyl/i-propyl.

5. Dye mixture according to one or more of Claims 1 to 4, characterized in that it consists exclusively of individual dyes of the general formula I in which Hal denotes bromine.

6. Dye mixture according to one or more of Claims 1 to 5, characterized in that the percentage by weight of a dye of the general formula I is 10 to 90%, preferably 30 to 70%.

7. Dye mixture according to one or more of Claims 1 to 6, characterized in that it is present in the form of mixed crystals.

8. Process for the preparation of the dye mixtures mentioned in one or more of Claims 1 to 7, characterized in that
   a) at least two individual dyes of the general formula I are mixed with one another, or
   b) an amine of the formula IIa and/or an amine of the formula IIb

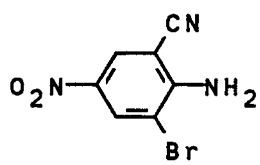
(IIa)

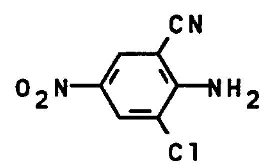
(IIb)

are diazotized and coupled onto a mixture of at least two different coupling components of the general formula III

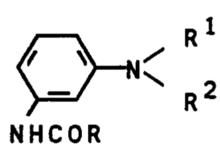
(III)

in which R, $R^1$ and $R^2$ have the meanings given in Claim 1, and the dye mixture, if desired, is converted in a manner known per se into a dye formulation.

9. Process for the preparation of the dye mixtures mentioned in one or more of Claims 1 to 7, characterized in that a mixture of individual dyes of the general formula I is recrystallized or dissolved and precipitated or is heated in water at temperatures of 80 to 190 ° C, preferably 100 to 140 ° C, in the presence of one or more dispersants or an organic solvent and, if desired, is converted into a dye formulation.

10. Process for dyeing and printing hydrophobic fibre materials and mixtures thereof with natural fibre materials, characterized in that a dye mixture according to one or more of Claims 1 to 7 is used.

**Claims for the following Contracting State : ES**

1. Process for preparing mixtures of monoazo dyes which contain two or more different dyes of the general formula I

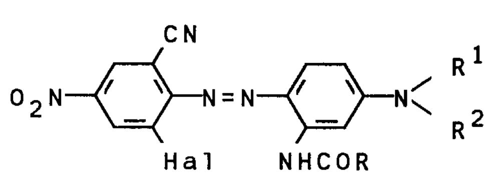
(I)

in which $R^1$ and $R^2$, independently of one another, denote linear or branched alkyl having 1 to 4 carbon atoms, R denotes linear or branched alkyl having 1 to 5 carbon atoms and Hal denotes chlorine or

bromine, or that they consist of these dyes, the dyes differing at least in the radicals R, characterized in that

a) at least two individual dyes of the general formula I are mixed with one another, or

b) an amine of the formula IIa and/or an amine of the formula IIb

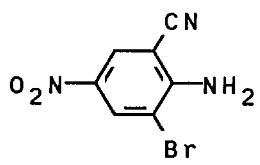 (IIa) 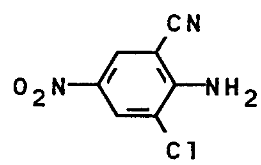 (IIb)

are diazotized and coupled onto a mixture of at least two different coupling components of the general formula III

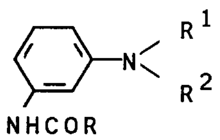 (III)

in which R, $R^1$ and $R^2$ have the meanings indicated, and the dye mixture, if desired, is converted in a manner known per se into a dye formulation.

**2.** Process according Claim 1, characterized in that a mixture of individual dyes of the general formula I is recrystallized or dissolved and precipitated or is heated in water at temperatures of 80 to 190 ° C, preferably 100 to 140 ° C, in the presence of one or more dispersants or an organic solvent and, if desired, is converted into a dye formulation.

**3.** Dye mixture according to Claim 1 and/or 2, characterized in that the starting substances are chosen such that the dye mixture obtained contains two different dyes of the general formula I.

**4.** Process according to one or more of Claims 1 to 3 characterized in that the starting substances are chosen such that $R^1$ and $R^2$ denote linear alkyl having 2 to 4 carbon atoms, preferably ethyl, and R denotes alkyl having 1 to 3 carbon atoms.

**5.** Process according to one or more of Claims 1 to 4, characterized in that the starting substances are chosen such that the different dyes of the general formula I in the dye mixture obtained only differ in the various meanings of the radicals R and that the radicals R in the case of mixtures from two different dyes preferably have the meanings methyl/n-propyl, ethyl/n-propyl, methyl/ethyl or n-propyl/i-propyl.

**6.** Process according to one or more of Claims 1 to 5, characterized in that the starting substances are chosen such that the dye mixture obtained consists exclusively of individual dyes of the general formula I in which Hal denotes bromine.

**7.** Process according to one or more of Claims 1 to 6, characterized in that the starting substances are chosen such that in the dye mixture obtained the percentage by weight of a dye of the general formula I is 10 to 90%, preferably 30 to 70%.

**8.** Process for dyeing and printing hydrophobic fibre materials and mixtures thereof with natural fibre materials, characterized in that a dye mixture is used which has been prepared by a process according to one or more of Claims 1 to 7.

**Revendications**

**Revendications pour les Etats contractants suivants : CH, DE, FR, GB, IT, LI**

**1.** Mélanges de colorants monoazoïques, caractérisés en ce qu'ils contiennent deux ou plus de deux colorants différents répondant chacun à la formule générale (I)

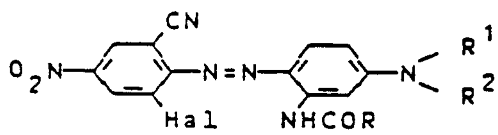

(I)

(dans laquelle

$R^1$ et $R^2$ représentent chacun, indépendamment l'un de l'autre, un groupe alkyle linéaire ou ramifié ayant 1 à 4 atomes de carbone ;

R représente un groupe alkyle linéaire ou ramifié ayant 1 à 5 atomes de carbone ; et

Hal représente un atome de chlore ou de brome), ou en ce que ces mélanges consistent en ces colorants , les colorants différant l'un de l'autre au moins par les restes R.

**2.** Mélange de colorants selon la revendication 1, caractérisé en ce qu'il contient deux colorants différents répondant à la formule générale (I)

**3.** Mélange de colorants selon la revendication 1 et/ou 2, caractérisé en ce que R1 et $R^2$ représentent chacun un groupe alkyle linéaire ayant 2 à 4 atomes de carbone, avantageusement un groupe éthyle, et R représente un groupe alkyle ayant 1 à 3 atomes de carbone.

**4.** Mélange de colorants selon une ou plusieurs des revendications 1 à 3, caractérisé en ce que les colorants de formule générale (I) ne diffèrent que par des sens différents des restes R et en ce que, dans le cas de mélanges formés de deux colorants différents, les restes R représentent de préférence des groupes méthyle/propyle; éthyle/propyle; méthyle/éthyle ou propylee/isopropyl.

**5.** Mélange de colorants selon une ou plusieurs des revendications 1 à 4, caractérisé en ce qu'il consiste exclusivement en des colorants individuels répondant chacun à la formule générale (I) dans lesquels Hal représente un atome de brome.

**6.** Mélange de colorants selon une ou plusieurs des revendications 1 à 5, caractérisé en ce que la proportion pondérale d'un colorant de formule générale (I) est de 10 à 90 % avantageusement de 30 à 70 %

**7.** Mélange de colorants selon une ou plusieurs des revendications 1 à 6, caractérisé en ce qu'il est présent sous forme de cristaux mixtes.

**8.** Procédé pour préparer les mélanges de colorants cités dans une ou plusieurs des revendications 1 à 7, caractérisé en ce que :

a) on mélange l'un à l'autre au moins deux colorants individuels répondant chacun à la formule générale (I), ou

b) on diazote une amine de formule (IIa) et/ou une amine de formule (2b)

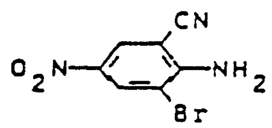

(IIa)

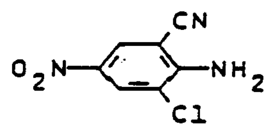

(IIb)

et l'on copule sur un mélange d'au moins deux copulants différents, répondant chacun à la formule générale (III)

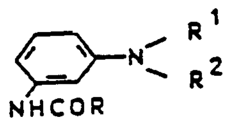

(III)

(dans laquelle R, $R^1$ et $R^2$ ont les sens indiqués) et l'on transforme éventuellement, de façon connue en soi, le mélange des colorants en une préparation de colorants.

**9.** Procédé pour préparer les mélanges de colorants cités dans un ou plusieurs revendications 1 à 7, caractérisé en ce qu'on soumet à recristallisation ou à dissolution un mélange de colorants individuels répondant chacun à la formule générale (I) et l'on provoque une précipitation ou bien l'on chauffe le mélange dans de l'eau à des températures de 80 à 190 °C, avantageusement de 100 à 190 °C en présence d'un dispersant ou d'un solvant organique, et éventuellement on transforme en une préparation de colorants.

**10.** Procédé pour teindre et imprimer les matières en fibres hydrophobes et leurs mélanges avec des matières en fibres naturelles, caractérisé en ce qu'on utilise un mélange de colorants , selon une ou plusieurs des revendications 1 à 7.

**Revendications pour l'Etat contractant suivant : ES**

**1.** Procédé pour préparer des mélanges de colorants monoazoïques, qui contiennent deux ou plusieurs colorants différents répondant chacun à la formule générale (I)

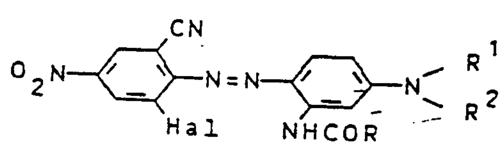

(I)

(dans laquelle

$R^1$ et $R^2$ représentent chacun, indépendamment l'un de l'autre, un groupe alkyle linéaire ou ramifié ayant 1 à 4 atomes de carbone;

R représente un groupe alkyle, linéaire ou ramifié, comportant 1 à 5 atomes de carbone,

et Hal représente un atome de chlore ou de brome) ou qui consiste en ces colorants, les colorants différant au moins par les restes R, procédé caractérisé en ce que :

a) on mélange l'un à l'autre au moins deux colorants individuels répondant chacun à la formule générale (I), ou

b) on diazote une amine de formule (2a) et/ou une amine de formule (2b)

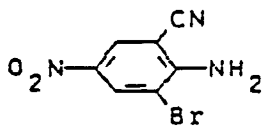

(IIa)

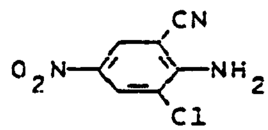

(IIb)

et l'on copule sur un mélange d'au moins deux copulants différents répondant chacun à la formule générale (III)

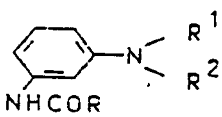

(III)

(dans laquelle R, $R^1$ et $R^2$ ont les sens indiqués) et l'on transforme éventuellement, de façon connue en soi, le mélange des colorants en une préparation de colorants.

2. Procédé selon la revendication 1, caractérisé en ce qu'on soumet à recristallisation ou à dissolution et précipitation un mélange des colorants individuels répondant chacun à la formule générale (I) ou en ce qu'on chauffe ce mélange dans de l'eau à des températures de 80 à 190 ° C, avantageusement de 100 à 140 ° C, en présence d'un ou plusieurs dispersants ou d'un solvant organique, et l'on transforme éventuellement en une préparation de colorants.

3. Procédé selon la revendication 1 et/ou la revendication 2, caractérisé en ce qu'on choisit les composés de départ de manière que le mélange des colorants qui en résulte contienne deux colorants différents répondant chacun à la formule générale (I).

4. Procédé selon une ou plusieurs des revendications 1 à 3, caractérisé en ce qu'on choisit les composés de départ de manière que $R^1$ et $R^2$ représentent chacun un groupe linéaire ayant 2 à 4 atomes de carbone, avantageusement chacun un groupe éthyle, et que R représente un groupe alkyle ayant 1 à 3 atomes de carbone.

5. Procédé selon une ou plusieurs revendications 1 à 4, caractérisé en ce qu'on choisit les composés de départ de manière que les différents colorants répondant chacun à la formule générale (I) ne diffèrent, dans le mélange des colorants qui en résulte, que par les sens différents des restes R et en ce que, dans le cas de mélanges de deux colorants différents, les restes R représentent de préférence des groupes méthyle/propyle, éthyle/propyle; méthyle/éthyle ou propyle/isopropyle.

6. Procédé selon une ou plusieurs des revendications 1 à 5, caractérisé en ce qu'on choisit les composés de départ de manière que le mélange des colorants qui en résulte consiste exclusivement en des colorants individuels répondant chacun à la formule générale (I) , dans laquelle Hal représente un atome de brome..

7. Procédé selon une ou plusieurs des revendications 1 à 6, caractérisé en ce qu'on choisit les composés de départ de manière que , dans le mélange des colorants qui en résulte, la proportion pondérale d'un colorant de formule générale (I) représente 10 à 90 %, de préférence 30 à 70 %.

8. Procédé pour teindre et imprimer des matières en fibres hydrophobes et leurs mélanges avec des matières en fibres naturelles, caractérisé en ce qu'on utilise un mélange de colorants qui a été préparé

par un procédé selon une ou plusieurs des revendications 1 à 7.